# FASCICULE DE BREVET EUROPEEN

(11) **EP 1 880 827 B1**
(45) Date de publication et mention de la délivrance du brevet: **08.07.2009**
(21) Numéro de dépôt: 07112896.1
(22) Date de dépôt: 20.07.2007
(51) Int. Cl.: B29C 51/06, B29C 33/38, B29C 51/10, B29C 51/30, B29C 51/36, B29C 51/46

(54) **Procédé de thermoformage permettant l'obtention de formes complexes**
Verfahren zum Tiefziehen, um komplexen Formen zu erhalten
Method of thermoforming used to obtain complex shapes

(30) Priorité: 21.07.2006 FR 0653066
(43) Date de publication de la demande: 23.01.2008
(73) Titulaire: AXON'CABLE, 51210 Montmirail (FR)
(72) Inventeur: Yeung, Chor Keung, 52600 Chaudenay (FR); Perez, Sophie, 02540 Marchais en Brie (FR); Bony, Frédéric, 02400 Brasles (FR)
(74) Mandataire: Barbin le Bourhis, Joël

(56) Documents cités:
- EP-A- 1 048 438
- EP-A- 1 367 438
- WO-A-02/072335
- GB-A- 972 325
- JP-A- 59 209 821
- JP-A- 2004 034 656
- US-B1- 6 537 477

## Description

La présente invention concerne un procédé de thermoformage permettant la fabrication de pièces de forme complexe. Un tel procédé est notamment utilisé pour le thermoformage de membranes expansées souples comme les membranes en PTFE (poly-tétra-fluor-éthylène).

### DESCRIPTION DE L'ART ANTERIEUR

Le thermoformage est un procédé bien connu pour la fabrication de pièces en matière plastique dont la forme est une coque mince, voir, par exemple, GB 972 325. Ses avantages principaux sont les suivants : Il ne nécessite pas de préparation de la matière première ; les outillages utilisés sont généralement peu coûteux ; le procédé est simple et de mise en oeuvre rapide.

Néanmoins, dans le cas de pièces de forme complexe, et dans le cas de certains thermoplastiques fragiles, le thermoformage peut s'avérer difficile ou impossible. En effet différents problèmes peuvent survenir : des déchirures dans la pièce ; des problèmes dimensionnels et l'impossibilité d'obtenir la forme souhaitée ; le manque de stabilité dimensionnelle qui conduit à fabriquer des pièces dont la forme n'est pas stable dans le temps ; l'apparition de zones de faible épaisseur qui ne possèdent pas les propriétés mécaniques ou autres attendues.

Ces problèmes de fabrication peuvent être encore plus délicats dans le cas de pièces en plastique expansé et notamment en PTFE. En effet ce type de fabrication est particulièrement délicat. A une température trop faible, le plastique ne se déforme pas correctement et la forme souhaitée n'est pas atteinte ; à une température trop élevée, la structure expansée disparaît et les propriétés mécaniques de la pièce fabriquée ne possèdent plus les propriétés de la matière expansée que l'on souhaitait pourtant conserver. L'amorphisation partielle de la structure de la membrane de PTFE préservant ses propriétés mécaniques est décrite notamment par le document US 3,953,566 de Gore.

De plus, le comportement de ces membranes est lié à leur mémoire élastique importante et à leur capacité d'expansion.

Dans des conditions optimales de thermoformage, ces membranes peuvent être soumises à des déformations allant jusqu'à 1000% (x 10) de leur taille initiale, ce qui est un atout pour le thermoformage. L'épaisseur de la membrane diminue légèrement, avec une baisse de la densité, mais uniformément sur la surface déformée.

Cependant, dans le cas de pièces de forme complexe, la mise en oeuvre du thermoformage peut générer des zones de moindre résistance dans les pièces.

Ces zones ne se trouvent pas dans des parties du moule où la déformation de la membrane est libre. C'est au contraire dans les zones de contact avec le moule, qui limitent la répartition homogène des déformations, que peuvent apparaître ces zones de moindre résistance.

Ainsi, si l'on considère un moule 'femelle' avec une cavité de forme régulière, dont la section est un arc de cercle par exemple, le thermoformage peut donner un résultat satisfaisant. En revanche, pour une forme complexe la déformation de la membrane en contact avec le moule n'est pas régulière ; ceci entraîne donc localement des zones de forte déformation. C'est ainsi que sont formées des zones d'épaisseur réduite, à faible résistance mécanique.

Le but de l'invention est de remédier aux inconvénients précités des dispositifs de thermoformage en définissant un procédé de thermoformage apte à permettre la production de pièces thermoformées d'épaisseur relativement constante, et sans rencontrer les problèmes de fabrication cités.

### DEFINITION DE L'INVENTION

Ces nouvelles possibilités de fabrication sont atteintes grâce au fait que le thermoformage n'est pas réalisé en une seule étape, mais en plusieurs étapes de formage successives.

Le procédé de fabrication d'une pièce mince dont le matériau est une matière plastique constituée majoritairement de PTFE expansé selon l'invention comporte les étapes mentionnées dans la revendication 1.

Dans ce qui suit, on dira qu'une forme, une surface, ou une courbe (par exemple une courbe de sectionnement ou section), est régularisée lorsqu'elle est remplacée respectivement par une forme, une surface, une courbe, de courbure plus régulière. Cela peut être le cas par exemple pour une forme, une surface, une courbe, dont le plus petit rayon de courbure à l'intérieur de la zone considérée est augmenté par rapport à sa valeur initiale.

Dans l'unité de thermoformage, la forme d'une zone dans l'un des moules peut être avantageusement définie par régularisation de la zone correspondante du moule suivant (le moule utilisé à l'étape suivante).

Avantageusement, cette régularisation peut se faire en suivant différentes méthodes proposées ci-dessous.
- La régularisation peut être faite à partir de sections choisies mesurées sur cette zone dans le moule suivant.
- Plus précisément, cette régularisation peut être faite de manière à conserver la longueur développée de sections choisies mesurées sur cette zone. Cette disposition permet lors de l'étape de formage suivante, de réduire les allongements subis par la matière dans le moule et ainsi, de faciliter l'obtention d'une pièce d'épaisseur constante.
- La régularisation de l'ensemble ou d'une partie des sections indiquées ci-dessus peut être faite en particulier en remplaçant les sections considérées par des courbes simples, par exemple des arcs de cercle ou des parties d'ellipse.

On notera qu'on cherche de manière générale à donner à un moule intermédiaire une forme approchée, et de surface comparable à celle du moule suivant. De préférence, le moule intermédiaire aura une surface égale ou même légèrement supérieure à la surface du moule suivant. Plus simplement, on peut seulement s'assurer que les longueurs développées de sections choisies du moule intermédiaire soient égales ou légèrement supérieures aux longueurs développées des sections correspondantes du moule suivant.

Ainsi, la membrane thermoformée dans une étape intermédiaire occupe sans difficulté l'espace prévu pour elle dans le moule suivant. Grâce à la mémoire de forme de la membrane, la surface en excès formée à l'étape intermédiaire est résorbée au cours de l'étape suivante.

La mise en oeuvre de cette méthode permet l'obtention de membranes de formes complexes et d'épaisseur relativement uniforme ou homogène.

Une autre méthode pour définir la forme de l'un des moules consiste à faire une inversion locale de la forme de la zone correspondante du moule suivant, en effectuant une symétrie par rapport à un plan.

Pour permettre l'obtention de pièces thermoformées de forme complexe, l'unité de thermoformage définie ci-dessus doit préférentiellement être mise en oeuvre en respectant certaines règles opératoires et pour certains matériaux.

Ainsi, ce procédé de thermoformage donne pleinement ses résultats quand le matériau utilisé est une matière plastique expansée, une matière thermoplastique fluorée expansée, ou notamment une membrane de PTFE expansé.

La réalisation du thermoformage avec moule intermédiaire dans l'unité de thermoformage est en effet particulièrement intéressante dans le cas de membranes expansées, en PTFE notamment. Avantageusement, le façonnage de ces membranes en plusieurs étapes de formage successives permet de résoudre les problèmes d'apparition de zones d'épaisseur réduite et de moindre résistance mécanique lors de la fabrication.

Enfin, les caractéristiques de moules permettront à l'homme du métier de définir de nouvelles unités de formage possédant la même aptitude à la production de pièces de formes complexes.

On comprendra que le terme moule désigne ici tout outillage ou dispositif de formage de matière plastique.

### DESCRIPTION DES FIGURES

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- La figure 1 est une vue schématique en coupe d'une unité de thermoformage;
- La figure 2 est un exemple de forme que l'on souhaite obtenir pour une pièce ;
- Les figures 3 et 4 sont des schémas illustrant la détermination de la forme d'un moule intermédiaire pour la fabrication de cette pièce ;
- Les figures 5 à 8 présentent une autre méthode de réalisation d'un moule intermédiaire, en effectuant des symétries locales par rapport à des plans.

### DESCRIPTION DETAILLEE DES MODES PREFERES DE REALISATION

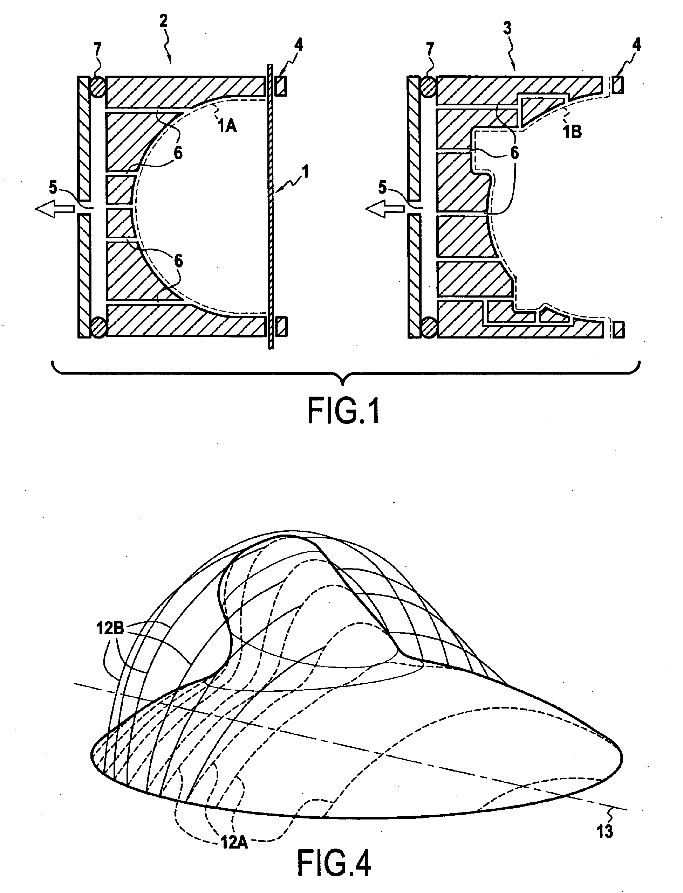

La figure 1 représente une unité de thermoformage. Celle-ci comporte un ensemble de moules 2,3, un système d'aspiration (partiellement représenté), un système de chauffage (non représenté). Chaque moule est équipé d'un système de maintien de plaque 4. Le système d'aspiration comprend une ou plusieurs chambres d'aspiration 5, des canaux d'aspiration 6, des joints d'étanchéité 7 sur les chambres d'aspiration.

La plaque 1 de matière plastique est mise en place dans le système de maintien de plaque 4. Le système de chauffage vient ramollir la plaque 1, pendant que le système d'aspiration crée une dépression (dans l'exemple présenté) dans la chambre d'aspiration. La dépression se propage via les canaux d'aspiration jusqu'à la face non visible de la plaque 1. Sous l'effet du différentiel de pression entre la face visible et la face non visible, la plaque 1 ramollie par la chaleur vient se plaquer et se conformer sur le moule.

Dans le cas de l'unité présentée en figure 1, l'unité comporte seulement deux moules correspondant à deux étapes de formage. La plaque est d'abord formée dans le moule intermédiaire 2 et prend une forme dont la section se rapproche dans l'exemple choisi d'un demi-cercle (1A en pointillé). Ensuite, la plaque est formée dans le moule final 3 au cours de l'étape finale de formage qui donne la forme définitive 1B.

Du fait que la pièce a reçue dans le moule 2 une forme préparatoire adéquate approchée de la forme définitive, l'opération de formage de l'étape finale donne de bons résultats, c'est-à-dire notamment que la matière ne présente pas d'élongations ou d'amincissements excessifs et ne se déchire pas.

Au lieu de mettre le moule en dépression pendant les étapes de formage, il est également possible d'appliquer une pression sur la face visible de la pièce, la chambre d'aspiration, ses joints d'étanchéité, les canaux d'aspiration, étant modifiés en conséquence. De telles dispositions sont connues de l'homme du métier.

Plus généralement, l'unité de thermoformage peut comporter plusieurs moules de formes différentes de manière à pouvoir réaliser les opérations successives de formage : Une plaque est d'abord mise en forme sur le premier moule, puis après conformation par celui-ci, sur le moule suivant, et ainsi de suite jusqu'au dernier moule qui lui donne sa forme définitive (les changements de forme liés à la sortie de moule et au refroidissement étant mis à part). D'une manière générale, plus la forme est complexe et comprend des zones de fort allongement de la matière, plus le nombre de moules sera élevé.

Les moules présentés par les figures sont à empreinte unique, mais naturellement le procédé s'applique à des moules multi-empreintes.

Les moules peuvent être des moules femelles c'est-à-dire qu'ils esquissent ou reproduisent le côté concave de la pièce. Les moules peuvent aussi être des moules mâles. L'utilisation de moules femelles est préférable, la fixation des plaques ou membranes utilisées pour la fabrication étant particulièrement simple sur de tels moules comme le montre la figure 1.

Avantageusement, un moulage par dépression peut être réalisé plutôt qu'un moulage par injection d'air sous pression. Le moulage par dépression permet en effet de chauffer directement la matière sur sa face libre à l'air chaud, et d'observer la déformation pour piloter le déroulement du procédé. Le chauffage peut être réalisé à l'aide d'un système de chauffage à infra-rouges, à air chaud pulsé, ou autre.

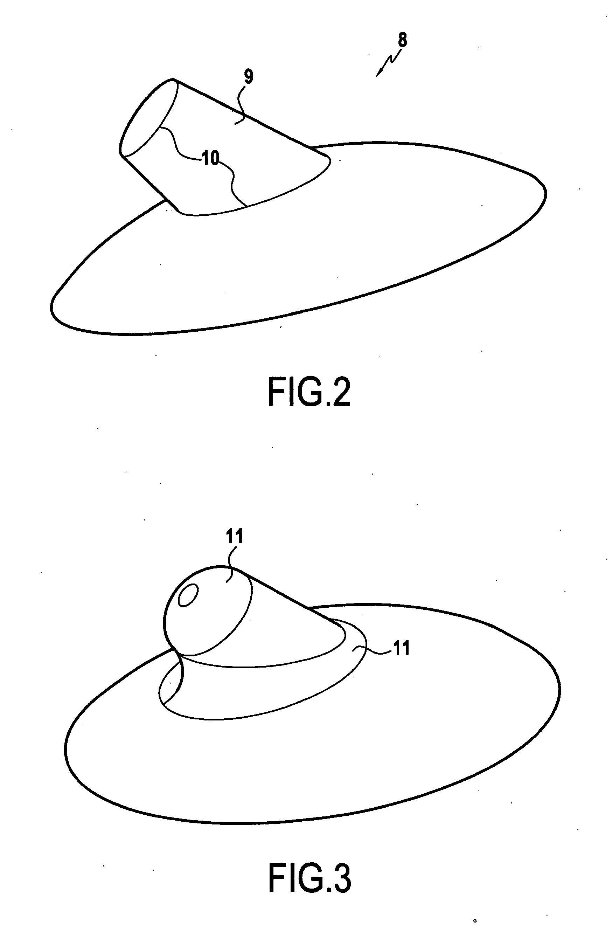

La forme d'un moule intermédiaire est déterminée à partir de la forme du moule suivant. La relation entre les formes des deux moules pourra être mieux comprise grâce à l'exemple suivant des figures 2 à 4.

La figure 2 présente un exemple de pièce 8 à fabriquer. Cette pièce comporte une zone 9 de fort allongement en partie centrale. La forme de la pièce comporte en particulier des arêtes vives 10.

Comme il a été dit plus haut, une forme, une surface, ou une courbe (par exemple une courbe de sectionnement ou section), est régularisée lorsqu'elle est remplacée respectivement par une forme, une surface, une courbe, de courbure plus régulière. Cela peut être le cas par exemple pour une forme, une surface, une courbe, dont le plus petit rayon de courbure à l'intérieur de la zone considérée est augmenté par rapport à sa valeur initiale.

Un première méthode de définition de la forme du moule intermédiaire consiste à régulariser la forme du moule suivant. Cette régularisation peut s'opérer de différentes manières.
- Selon l'exemple de la figure 3, la régularisation peut se faire en augmentant les valeurs de rayon, notamment sur les arêtes et zones de forte courbure. Avantageusement, on répartit à cette occasion la courbure de la pièce sur une zone plus grande. La figure 3 montre dans le cas de l'exemple présenté en figure 2, une forme de moule intermédiaire utilisable pour préparer la matière en vue de l'étape finale. Les arêtes vives 10 de la figure 2 ont été remplacées par des congés 11.
- La figure 4 montre un autre mode de régularisation : Elle est faite dans ce cas par régularisation d'un ensemble de sections choisies 12. Ces sections pourront en particulier être choisies perpendiculaires à un même axe 13.
- Sur chaque section, comme le montre la figure 4, un moyen avantageux pour régulariser la courbe obtenue, consiste à remplacer la section par une courbe de même longueur. Préférentiellement, on choisira une courbe sans point d'inflexion comme par exemple un arc de cercle ou d'ellipse. La figure 4 présente les sections initiales 12A et les sections régularisées 12B qui seront utilisées pour définir le moule intermédiaire : La forme de celui-ci pourra être par exemple obtenue par interpolation de ces sections.

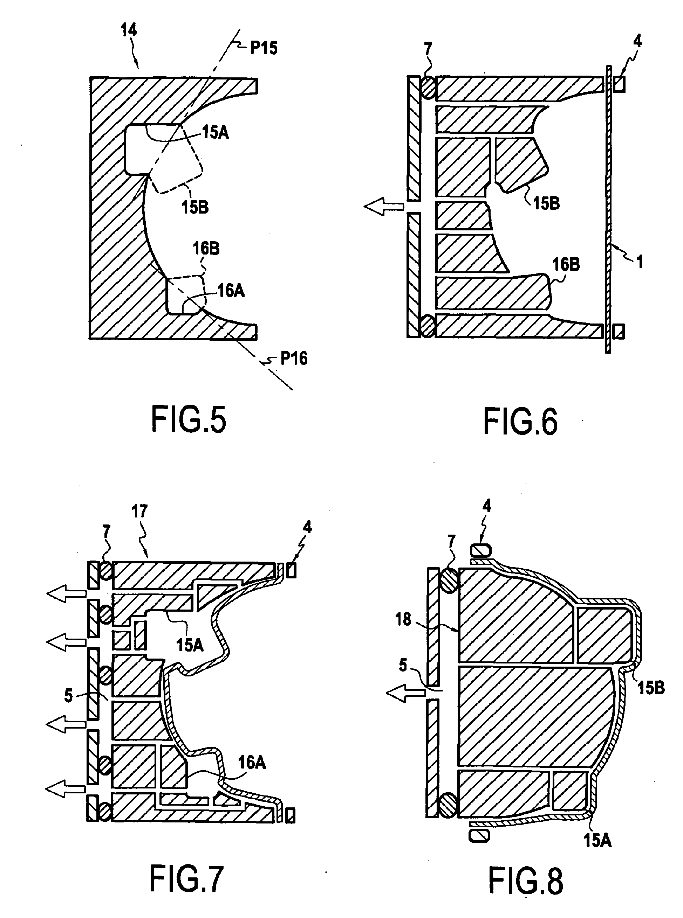

Dans les figures 5 à 8, il est présenté une autre possibilité pour la forme des moules intermédiaires. Pour certaines formes complexes et notamment les zones qui nécessitent un fort allongement de la matière, cette méthode pour définir un moule intermédiaire peut donner de meilleurs résultats que les méthodes précédentes.

La figure 5 présente un schéma de définition pour la forme d'un moule intermédiaire. La forme 14 présentée comporte deux zones de fort allongement 15A et 16A, difficiles à réaliser en thermoformage.

Pour réussir à thermoformer de telles zones, la forme choisie pour le moule intermédiaire est obtenue de la manière suivante :

On détermine deux plans de symétrie P15 et P16. Pour ces plans on choisit généralement les plans d'intersection entre la zone de fort allongement et la forme générale de la pièce.

On réalise une symétrie des détails 15A et 16A par rapport à ces plans P15 et P16, ce qui fournit les formes 15B et 16B 'en miroir' des deux détails.

Avantageusement, les portions retournées 15B et 16B entrent en contact avec la membrane plus tôt au cours de l'opération de thermoformage. De ce fait, dans la zone de forme inversée, l'épaisseur de membrane obtenue est légèrement plus importante. Cela a pour effet de compenser l'effet inverse qui se produit à l'étape suivante (figures 7 ou 8)

La figure 6 présente le moule intermédiaire obtenu à partir des formes définies par la méthode précédente.

La figure 7 présente une première possibilité pour l'étape finale de formage suivant l'étape intermédiaire réalisée avec le moule de la figure 6. La plaque 1 est fixée dans le moule 17 par le système de maintien 4. Sa forme vient de ce qu'elle a été conformée dans le moule de la figure 6 ; elle comporte donc notamment les formes inversées 15B et 16B.

Le moule 17 peut avantageusement comporter plusieurs chambres d'aspiration de manière à pouvoir agir plus spécifiquement sur les différentes zones de la pièce. En particulier, cela permet de soumettre les formes inversées à une dépression plus forte, ou pendant une plus longue durée, que le reste de la pièce. Un exemple de moule avec plusieurs chambres d'aspiration est présenté sur la figure 7. Lors de la mise en dépression du moule, les formes 15B et 16B vont s'inverser et prendre les formes voulues 15A et 15B.

La figure 8 représente une autre possibilité pour l'étape finale de formage suivant l'étape intermédiaire réalisée avec le moule de la figure 6. Du fait que certaines membranes sont très souples, il est envisageable avantageusement que l'étape finale de thermoformage soit faite sur un moule mâle 18 comme le montre la figure 8. L'inversion des zones telles que 15B et 16B se fait alors dès le bridage de la plaque préformée sur le moule.

La mise en oeuvre de l'unité de thermoformage se fait de la manière suivante :

La matière mise en oeuvre est initialement sensiblement sous forme de feuille 1. Les étapes de formage respectent chacune le processus suivant :
- bridage de la plaque sur le système de maintien,
- Activation du système de chauffage qui vient ramollir la feuille,
- Activation du système de mise en pression/dépression dans le moule. Le différentiel de pression créé entre les faces de la feuille vient déformer celle-ci et la plaquer sur le moule,
- Arrêt des systèmes de chauffage et mise en pression/dépression,
- Dépose de la plaque formée,
- Transfert de celle-ci vers le moule suivant.

Avantageusement, pour une unité de thermoformage équipée d'un système d'aspiration, celui-ci possède un débit variable afin que l'opérateur en charge du thermoformage puisse régler la dépression à appliquer en fonction du matériau et de l'état du matériau.

Cette fonction est particulièrement utile dans le cas où un moule comporte plusieurs chambres d'aspiration, comme cela a été proposé plus haut.

Ce procédé peut avantageusement être utilisé pour des matériaux expansés. Préférentiellement on utilisera des membranes souples pour faciliter les opérations de formage et notamment le bridage de la plaque de matière plastique dans le moule.

Pour ces raisons, le procédé est particulièrement adapté à la conformation de matières thermoplastiques fluorées expansées et en particulier de membranes à base de PTFE. La souplesse de ces membranes et leur faible adhérence contribuent en effet au succès de la fabrication.

De plus, pour de tels matériaux, en s'élevant en température, la plaque change de translucidité lorsqu'elle atteint la température de transition cristalline. Il est alors possible simplement de limiter la durée du passage à haute température afin de préserver au mieux les propriétés mécaniques de la membrane initiale, tout en assurant la stabilité dimensionnelle de la forme imposée pendant le formage.

Le procédé de thermoformage présenté dans ce document, permet l'obtention de pièces de forme complexe, stables en dimensions, et avec de faibles variations en épaisseur.

Ainsi, les caractéristiques spécifiques du procédé de thermoformage définie par l'invention, conjointement avec les propriétés de souplesse et de glisse de membranes en PTFE expansé permettent la fabrication de pièces de formes jusqu'à présent irréalisables par les méthodes traditionnelles de thermoformage.

## Revendications

1. Procédé de fabrication d'une pièce mince dont le matériau est une matière plastique constituée majoritairement de PTFE expansé, et comportant les étapes suivantes :
On réalise au moins une étape intermédiaire de thermoformage, en utilisant au cours de celle(s)-ci au moins un moule intermédiaire, la ou les forme(s) du ou des moule(s) intermédiaire(s) permettant de faire évoluer progressivement la forme de la matière mise en oeuvre,
On réalise une étape finale de thermoformage au cours de laquelle un moule final permet l'obtention de la forme voulue.

2. Procédé selon la revendication 1, avec mise en oeuvre d'un système d'aspiration (5) à débit variable.

3. Procédé selon la revendication 1 ou 2, **caractérisé en ce que** la forme d'une zone d'un moule est définie en régularisant la zone correspondante du moule suivant.

4. Procédé selon l'une quelconque des revendications 1 à 3, **caractérisé en ce que** la forme d'au moins une zone de l'un des moules est déterminée à partir de la forme de la zone correspondante du moule suivant, de manière à régulariser des sections choisies (12A) mesurées sur cette zone dans le moule suivant.

5. Procédé selon la revendication 4, **caractérisé en ce que** la régularisation de l'ensemble ou d'une partie desdites sections se fait en remplaçant les sections considérées par des courbes (12B) de mêmes extrémités ne comportant pas de point d'inflexion, qui peuvent être par exemple des arcs de cercle ou des parties d'ellipse.

6. Procédé selon l'une quelconque des revendications 1 à 5, **caractérisé en ce que** la forme d'au moins une zone de l'un des moules est déterminée à partir de la forme de la zone correspondante du moule suivant, de manière à conserver la longueur développée de sections choisies mesurées sur cette zone.

7. Procédé selon l'une quelconque des revendications 1 à 6, **caractérisé en ce que** la forme d'au moins une zone (15B,16B) de l'un des moules est déterminée sensiblement en inversant localement la forme de la même zone du moule suivant (15A,16A), en effectuant une symétrie par rapport à des plans.

8. Procédé selon l'une quelconque des revendications 1 à 7, **caractérisé en ce que** la surface ou les longueurs développées de sections du moule intermédiaire est ou sont supérieure(s) à la surface ou les longueurs développées de sections correspondantes du moule suivant.

9. Procédé selon l'une quelconque des revendications 1 à 8, **caractérisé en ce que** la matière mise en oeuvre est initialement sensiblement sous forme de feuille.

## Claims

1. A method for making a thin part, the material of which is a plastic in majority consisting of expansed PTFE, and including the following steps:
at least one intermediate thermoforming step is performed, by using during said step(s) at least one intermediate mold, the shape(s) of the intermediate mold(s) allowing gradual development of the shape of the applied material,
a final thermoforming step is performed during which a final mold allows the desired shape to be obtained.

2. The method according to claim 1, with application of a suction system (5) with variable flow rate.

3. The method according to claim 1 or 2, **characterized in that** the shape of an area of a mold is defined by regularizing the corresponding area of the following mold.

4. The method according to any of claims 1 to 3, **characterized in that** the shape of at least one area of one of the molds is determined from the shape of the area corresponding to the following mold, so as to regularize selected sections (12A) measured on this area in the following mold.

5. The method according to claim 4, **characterized in that** the regularization of the whole or part of said sections is accomplished by replacing the relevant sections with curves (12B) of same ends not including any inflection point, which may be circular arcs or elliptical portions.

6. The method according to any of claims 1 to 5, **characterized in that** the shape of at least one area of one of the molds is determined from the shape of the corresponding area of the following mold, so as to retain the developed length of selected sections measured on this area.

7. The method according to any of claims 1 to 6, **characterized in that** the shape of at least one area (15B, 16B) of one of the molds is substantially determined by locally inverting the shape of the same area of the following mold (15A, 16A), by performing a symmetry transformation with respect to planes.

8. The method according to any of claims 1 to 7, **characterized in that** the surface or the developed lengths of sections of the intermediate mold is or are greater than the surface or the developed lengths of corresponding sections of the following mold.

9. The method according to any of claims 1 to 8, **characterized in that** the applied material initially is substantially in the form of a sheet.

## Patentansprüche

1. Verfahren zur Herstellung eines dünnen Werkstücks, dessen Material ein Plastikwerkstoff ist, der überwiegend aus expandiertem PTFE besteht, umfassend die folgenden Schritte:
es wird mindestens ein Zwischenschritt der Thermoformung ausgeführt, in dessen (deren) Verlauf mindestens eine Zwischenform verwendet wird, wobei es die Gestalt(en) der Zwischenform(en) ermöglicht (ermöglichen), daß sich die Gestalt des eingesetzten Werkstoffs fortschreitend ausprägt,
es wird ein Abschußschritt der Thermoformung ausgeführt, in dessen Verlauf eine Abschlußform das Erhalten der gesuchten Gestalt ermöglicht.

2. Verfahren nach Anspruch 1 unter Einsatz eines Saugsystems (5) mit variablem Durchsatz.

3. Verfahren nach Anspruch 1 oder 2, **dadurch gekennzeichnet, daß** die Gestalt einer Zone einer Form definiert wird, indem die entsprechende Zone der folgenden Form reguliert wird.

4. Verfahren nach einem der Ansprüche 1 bis 3, **dadurch gekennzeichnet, daß** die Gestalt mindestens einer Zone einer der Formen ausgehend von der Gestalt der entsprechenden Zone der folgenden Form bestimmt wird, um die gewählten Abschnitte (12A) zu regulieren, die an dieser Zone in der folgenden Form gemessen werden.

5. Verfahren nach Anspruch 4, **dadurch gekennzeichnet, daß** die Regulierung der Gesamtheit oder eines Teils der Abschnitte erfolgt, indem die betrachteten Abschnitte durch Kurven (12B) mit den gleichen Enden ersetzt werden, die keinen Wendepunkt umfassen, die zum Beispiel Kreisbögen oder Teile von Ellipsen sein können.

6. Verfahren nach einem der Ansprüche 1 bis 5, **dadurch gekennzeichnet, daß** die Gestalt mindestens einer Zone einer der Formen ausgehend von der Gestalt der entsprechenden Zone der folgenden Form bestimmt wird, um die ausgeprägte Länge der gewählten Abschnitte zu bewahren, die an dieser Zone gemessen werden.

7. Verfahren nach einem der Ansprüche 1 bis 6, **dadurch gekennzeichnet, daß** die Gestalt mindestens einer Zone (15B, 16B) einer der Formen im wesentlichen bestimmt wird, indem die Gestalt der gleichen Zone der folgenden Form (15A, 16A) lokal umgedreht wird, indem eine Symmetrie bezogen auf Ebenen hergestellt wird.

8. Verfahren nach einem der Ansprüche 1 bis 7, **dadurch gekennzeichnet, daß** die ausgeprägte Oberfläche oder die ausgeprägten Längen der Abschnitte der Zwischenform größer ist oder sind als die ausgeprägte Oberfläche oder die ausgeprägten Längen der entsprechenden Abschnitte der folgenden Form.

9. Verfahren nach einem der Ansprüche 1 bis 8, **dadurch gekennzeichnet, daß** der eingesetzte Werkstoff anfänglich im wesentlichen die Form eines Blatts hat.
